# EUROPEAN PATENT APPLICATION

(11) **EP 3 603 928 A1**
(43) Date of publication of application: **05.02.2020**
(21) Application number: 18771568.5
(22) Date of filing: 09.02.2018
(51) Int. Cl.: B29C 45/17

(54) **MOLD ATTITUDE SETTING METHOD AND MOLD ATTITUDE SETTING DEVICE FOR INJECTION MOLDING MACHINE**

(30) Priority: 23.03.2017 JP 2017057594
(71) Applicant: Pascal Engineering Corporation, Itami-shi Hyogo 664-8502 (JP)
(72) Inventor: KITAURA Ichiro, Itami-shi Hyogo 664-8502 (JP)
(74) Representative: J A Kemp LLP
(86) International application number: PCT/JP2018/004635
(87) International publication number: WO 2018/173540

(57) **Abstract**

A mold posture setting method for an injection molding machine (1) includes: a preparation step of preparing, in advance, a mold posture setting device (20) for setting of a posture of a mold set (M), and fixing its position on a platen plate surface (11a); a mold bringing and fitting step of bringing the mold set (M) into the inter platen space (14) and fitting a locating ring (13) of the mold set (M) into a fitting hole (11h) of the plate surface; and a mold posture setting step of setting the posture of the mold set (M) to a prescribed posture by parallel shifting a mold edge regulation member (21) via a guidance means (22).

## Description

### TECHNICAL FIELD

The present invention relates to a mold posture setting method and a mold posture setting device of an injection molding machine.

### BACKGROUND ART

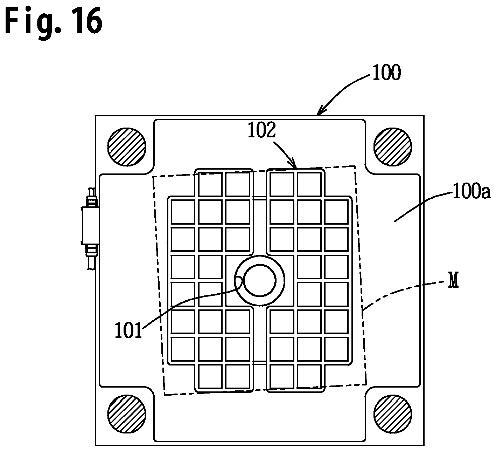

When exchanging a mold of an injection molding machine by employing a ceiling crane, as shown in Fig. 16, after a mold set that is no longer to be used (including a fixed mold and a movable mold) has been carried out from an inter platen space by a crane or the like, another mold set M that is scheduled for use and that is suspended from the crane or the like is brought into the inter platen space, and, with the mold set M still in this suspended state, a locating ring of the mold set M is fitted into a fitting hole 101 in a plate surface 100a of a fixed platen 100. At this time, the center of the mold set M coincides with the center of the plate surface 100a, but the posture of the mold set M is not necessarily set to the prescribed posture, and in many cases the state is one in which the mold set M is rotated by a small angle around the axis of the ring. It should be understood that, in the Fig. 16 example, a magnetic clamp device 102 is provided to the fixed side platen 100.

Accordingly, in the case of a mold set that is light in weight, the posture of the mold set is adjusted by pushing the mold by hand while it remains suspended from the crane, and, after the mold set has been put into the prescribed posture in which its lower edge becomes horizontal and also its left and right edges become vertical, the movable side platen is clamped and the fixed mold of the mold set is fixed to the fixed platen plate surface by a plurality of clamp devices or the like, and moreover the movable mold of the mold set is fixed to the movable side platen plate surface by a plurality of clamp devices or the like. On the other hand, in the case of a heavyweight mold, the posture of the mold is adjusted into the prescribed posture by operation of the crane.

Setting the posture of the mold to a prescribed horizontal posture in this manner is performed in order to improve the fluidity of the molten synthetic resin during injection molding, and also is performed because positional accuracy of the mold becomes very important when a large number of molded products are to be handled by a robot, or during insert molding when setting an insert member within the mold.

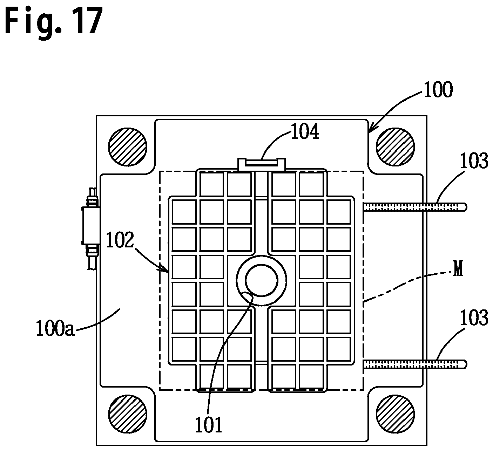

When adjusting the rotational posture of the mold set as described above and adjusting the mold set to the prescribed posture, normally, as shown in Fig. 17, for example, differential positioning screws 103 are contacted against the upper portion and the lower portion of the right edge surface of the mold set M, and the mold set M is adjusted to the prescribed posture while measuring the position in the horizontal direction of the upper portion of the right edge surface of the mold set M and the position in the horizontal direction of its lower portion. It should be understood that there are also some cases in which, instead of employing the pair of differential positioning screws 103 described above, a spirit level 104 is set on the upper edge of the mold set M, and the posture of the mold is adjusted to the prescribed posture with this spirit level 104.

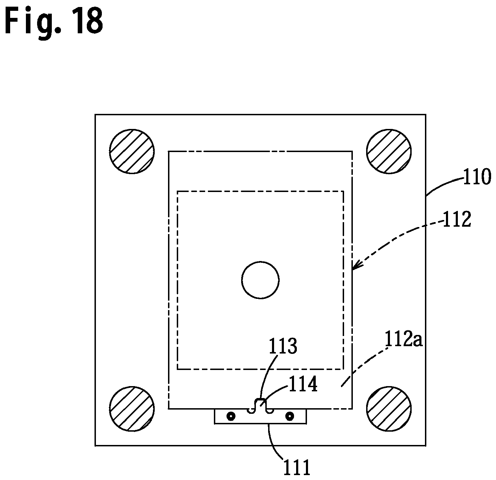

On the other hand, as shown in Fig. 18, there is a per se known technique of adjusting the posture of a mold 112 to a prescribed posture by fixedly providing a reference member 111 at the lower portion of a fixed side platen 110 and providing a protruding portion 114 at the central portion of the upper edge of this reference member 111 that can engage to a recessed portion 113 at the lower edge of a mold plate 112a of the mold 112, and by contacting the lower edge of the mold plate 112a against the upper surface of the reference member 111 and engaging the protruding portion 114 into the recessed portion of the mold plate 112a.

Here, with the mold positioning device of the molding machine disclosed in Patent Document #1, when the mold set is to be exchanged, after the mold set has been brought into the inter platen space, the mold set is put into the prescribed posture at the same time as its position in the vertical direction is determined by receiving and stopping the lower edge portion of the mold set by employing the mold positioning device.

And, with the article positioning mechanism disclosed in Patent Document #2, a technique is disclosed for setting a mold into a prescribed posture by providing a first locating ring whose outer shape is substantially a regular octagon to the mold (which is a fixed mold), by providing a second locating ring to the platen having a fitting hole substantially shaped as a regular octagon into which the first locating ring can fit, and by fitting the first locating ring into the second locating ring. However, in order to adopt such first and second locating rings, it is necessary to remodel both the mold and the platen, so that this technique lacks practicality and versatility.

### PRIOR ART DOCUMENT

### PATENT DOCUMENT

Patent Document #1: Japanese Laid-Open Patent Publication 2012-86492.
Patent Document #2: Japanese Laid-Open Patent Publication 2010-99958.

### SUMMARY OF INVENTION

### TECHNICAL PROBLEM

As described above, the task of adjusting the rotational posture of the mold set and of adjusting it to a prescribed horizontal posture necessitates a great deal of labor and time, since it is must be executed while performing measurement with differential positioning screws or with a spirit level.

In particular, in the case of a heavy mold that may weigh three tons or more, a great deal of labor and time are required for adjusting the posture of the mold to the prescribed posture by operating a crane.

And, with the technique shown in Fig. 18, if the position of the reference member 111 is not to be changed, it is necessary to set the sizes (in the vertical dimension) of the mold plates 112a of molds 112 of several types to be constant, and accordingly, in the case of a compact mold 112, the mold plate 112a is increased in size more than necessary; and it also becomes necessary to form the recessed portion 113 in the mold plate 112a.

Moreover, in the case of the mold positioning device of Patent Document #1, the position of the mold set in the vertical direction is set to its proper position, and also the posture of the mold set is set to the prescribed posture. With this method it is possible to optimize the size of the mold plate, but it is necessary to form a recessed portion in the mold.

The object of the present invention is to provide a mold posture setting method and a mold posture setting device for an injection molding machine that, during mold exchange, are capable of setting the posture of a mold efficiently in a simple manner by reference to a locating ring for positional determination.

### MEANS TO SOLVE THE PROBLEM

The mold posture setting method of claim 1 is a mold posture setting method for an injection molding machine, characterized by comprising : a preparation step of preparing in advance a mold posture setting device that sets a posture of a mold set when the mold set is brought into an inter platen space between platens of the injection molding machine, and fixes its position on a platen plate surface, and that comprises a mold edge regulation member that is capable of contacting against a horizontal edge surface or a vertical edge surface of the mold set in a surface contacting state, a guidance means that guides the mold edge regulation member to be shifted parallel to itself in a direction orthogonal to the mold edge regulation member; and a shifting drive means that drives the mold edge regulation member to shift parallel to itself so as to contact against an edge surface of the mold set; a mold bringing and fitting step of bringing the mold set, suspended from a suspension means, into the inter platen space and fitting a locating ring of the mold set into a fitting hole of the plate surface; and a mold posture setting step of, with the mold set still suspended from the suspension means, setting the posture of the mold set to a prescribed posture by parallel shifting the mold edge regulation member via the guidance means with the shifting drive means toward the mold set, so as to contact it against the edge surface of the mold in a surface contacting state.

According to the structure described above, it is possible to set the posture of the mold set efficiently to the prescribed posture by the simple operation of fitting the locating ring of the mold set into the fitting hole of the plate surface, and, in the state in which the mold set is suspended by the suspension means, shifting the mold edge regulation member with the shifting means so as to set the posture of the mold set to the prescribed posture by shifting the mold edge regulation member parallel to itself toward the mold set via the guidance means with the shifting drive means and contacting it against the edge surface of the mold surface in a surface-contacting state; and accordingly the working efficiency for exchanging the molds can be enhanced.

The mold posture setting method of claim 2 is the invention of claim 1, characterized in that the mold set includes a fixed side mold and a movable side mold.

According to the structure described above, it is possible to set the mold set including the fixed side mold and the movable side mold into the prescribed manner, without disturbing its integrity as a mold set.

The mold posture setting device for an injection molding machine of claim 3 is a mold posture setting device for an injection molding machine that sets the posture of a mold set when the mold set is brought into an inter platen space between platens of the injection molding machine, and that fixes its position on a platen plate surface, characterized by comprising: a mold edge regulation member that is capable of contacting against a horizontal edge surface or a vertical edge surface of the mold set in a surface contacting state; a guidance means that guides the mold edge regulation member to be shifted parallel to itself in a direction orthogonal to the mold edge regulation member; and a shifting drive means that drives the mold edge regulation member to shift parallel to itself so as to contact against an edge surface of the mold set; wherein, in a state in which the mold set is brought into the inter platen space and a locating ring of the mold set is fitted into a fitting hole of the plate surface, the posture of the mold set can be set into a prescribed posture by parallel shifting the mold edge regulation member toward the mold set via the guidance means by the shifting drive means and contacting it against an edge surface of the mold set in a surface contacting state.

According to the structure described above, in a similar manner to the case with claim 1, it is possible to set the posture of the mold set efficiently into the prescribed posture with the simple operation of shifting the mold edge regulation member with the shifting drive means, so that the working efficiency for exchanging the molds can be enhanced.

The mold posture setting device for an injection molding machine of claim 4 depending from claim 3 is characterized in that the guidance means comprises a base member disposed parallel to the mold edge regulation member and on the side opposite to the mold set with respect to the mold edge regulation member and fixed to the plate surface, and a pair of guide members that are passed through the base member so as to slide freely therein and whose end portions are connected to the mold edge regulation member.

According to the structure described above, it is possible to simplify the structure of the guidance means, since the guidance means includes the base member that is fixed to the plate surface, and the pair of guide members that are passed through the two end portions of the base member so as to slide freely therein and whose end portions are connected to the mold edge regulation member.

The mold posture setting device for an injection molding machine of claim 5 depending from claim 4 is characterized in that the shifting drive means comprises a hydraulic cylinder disposed parallel to the pair of guide members. According to the structure described above, it is possible to implement the shifting drive means with the hydraulic cylinder, which has a simple structure.

The mold posture setting device for an injection molding machine of claim 6 depending from claim 4 is characterized in that the shifting drive means comprises a screw shaft disposed between the pair of guide members and parallel thereto, a nut fixed to the base member, and an electric motor that rotationally drives the screw shaft. According to the structure described above, an electrically operated type shifting drive means implements the shifting drive means described above.

The mold posture setting device for an injection molding machine of claim 7 depending from claim 3 is characterized in that a pair of upper and lower hydraulic clamp devices, separated in the vertical direction, are provided to at least one of an intermediate portion of a left side portion of the plate surface and an intermediate portion of a right side portion thereof so as to be shiftable in the left to right direction, and a pair of clamp main bodies of the pair of clamp devices are connected by a link member; and the pair of clamp main bodies constitute the mold edge regulation member. According to the structure described above it is possible to simplify the structure of the mold posture setting device, since the mold edge regulation member is effectively implemented by the pair of hydraulic type clamp devices for fixing the mold.

### ADVANTAGES OF INVENTION

According to the invention of the present application, the various advantageous effects described above may be obtained.

### BRIEF DESCRIPTION OF DRAWINGS

Fig. 1 is a view of an injection molding machine according to a first concrete example of the present invention as seen from its operating side;
Fig. 2 is an elevation view of a fixed platen, a fixed auxiliary platen, and a mold posture setting device (before the posture of a mold is set);
Fig. 3 is an elevation view of the fixed platen, the fixed auxiliary platen, and the mold posture setting device (after the posture of the mold has been set);
Fig. 4 is a plan view of the fixed auxiliary platen and the mold posture setting device;
Fig. 5 is a right side view of the fixed auxiliary platen and the mold posture setting device;
Fig. 6 is a perspective view of a left edge regulation mechanism;
Fig. 7 is an elevation view of a mold posture setting device according to a second concrete example;
Fig. 8 is an elevation view of a mold posture setting device according to a third concrete example;
Fig. 9 is an elevation view of a mold posture setting device according to a fourth concrete example;
Fig. 10 is an elevation view of a mold posture setting device according to a fifth concrete example;
Fig. 11 is a plan view of the mold posture setting device of Fig. 11 and the fixed side platen;
Fig. 12 is a side view of the mold posture setting device of Fig. 11 and the fixed side platen;
Fig. 13 is an elevation view of a mold posture setting device according to a sixth concrete example;
Fig. 14 is an elevation view of a fixed platen and a mold posture setting device according to a seventh concrete example (before the posture of a mold is set);
Fig. 15 is an elevation view of the fixed platen and the mold posture setting device of Fig. 14 (after the posture of the mold has been set);
Fig. 16 is an elevation view showing a situation in which, when a mold set of an injection molding machine has been brought in with a prior art technique, the mold set is not adjusted to a prescribed posture;
Fig. 17 is an elevation view showing a situation in which, when a mold set of an injection molding machine has been brought in with a prior art technique, the mold set is adjusted to a prescribed posture; and
Fig. 18 is an elevation view showing a situation in which the posture of a mold is adjusted by the use of a reference member provided to an injection molding machine according to a prior art technique.

### DESCRIPTION OF EMBODIMENTS

Embodiments of the present invention will now be explained on the basis of concrete examples.

### Concrete Example 1

First, an injection molding machine 1 will be explained.

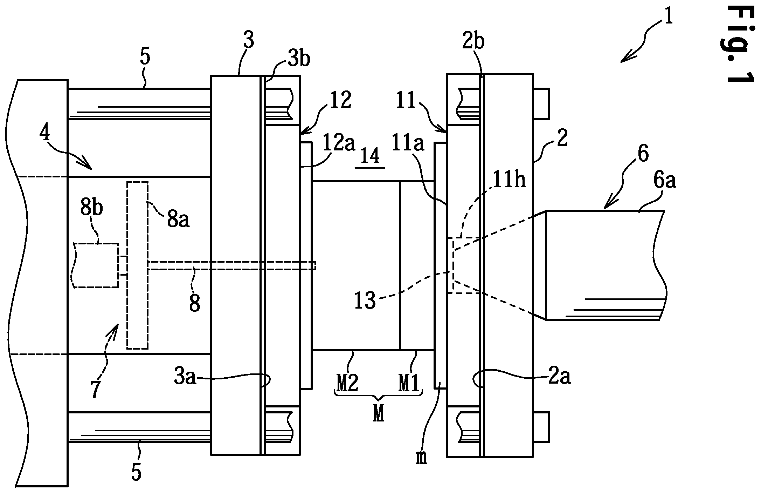

As shown in Fig. 1, the injection molding machine comprises: a fixed platen 2 and a movable platen 3 that mutually oppose one another, for fixing a mold set M (a fixed mold M1 and a movable mold M2); a platen drive mechanism 4 incorporating a hydraulic cylinder (or a drive motor) that drives the movable platen 3 in the directions to approach toward or to retreat from the fixed platen 2, in order to perform clamping together or opening up of the mold set M; four guide rods 5 that support and guide the movable platen 3 so that it can shift freely in the approaching or retreating directions; an injection mechanism 6 having an injection barrel 6a for supplying synthetic resin in the molten state to a cavity within the mold set M; an ejection mechanism 7 that extracts a molded product from the movable mold M2; a fixed side auxiliary platen 11 fixed to a plate surface 2a of the fixed platen 2; a movable side auxiliary platen 12 fixed to a plate surface 3a of the movable platen 3; heat insulating plates 2b, 3b installed between the platens 2, 3 and the auxiliary platens 11, 12, respectively, and a mold posture setting device 20 provided to the fixed auxiliary platen 11.

As will be described hereinafter, since, in this injection molding machine 1, a magnetic clamp device 11m is provided for fixing the mold, accordingly a mold falling down prevention device 30 (not shown in Fig. 1) is provided to the fixed auxiliary platen 11 and to the movable auxiliary platen 12.

When performing injection molding with this injection molding machine 1, the movable platen 3 is driven by the platen drive mechanism 4 in the direction to approach the fixed platen 2 and the movable mold M2 is put into the state in which it is pressed and clamped against the fixed mold M1, and, in this state, synthetic resin in the molten state is injected from the end of the injection barrel 6a into the mold set M. Subsequently, the movable platen 3 is driven by the platen drive mechanism 4 in the direction to move away from the fixed platen 2 and the mold opened state is established in which the movable mold M2 is removed away from the fixed mold M1. In this state, the molded product is ejected from the movable mold M2 by the ejection mechanism 7.

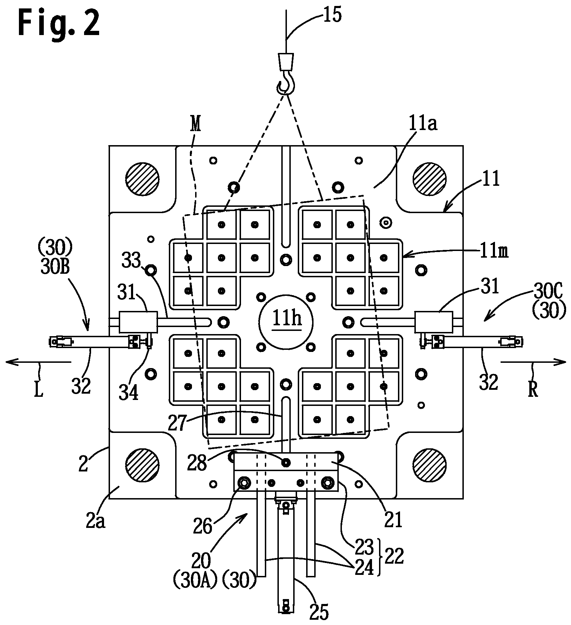

The ejection mechanism 7 comprises an ejector pin 8, an ejector plate 8a linked to the base end portion of this ejector pin 8, and a hydraulic cylinder 8b that drives the ejector pin 8 forward and backward via this ejector plate 8a. It should be noted that, in the following explanation, the arrow sign L indicates the left side, the arrow sign R indicates the right side, and the direction forward from the drawing paper in Fig. 2 indicates the front side.

Next, the fixed auxiliary platen 11 will be explained.

As shown in Figs. 1 and 2, the fixed side auxiliary platen 11 is a thick steel plate of almost the same size as the fixed platen 2. The auxiliary platen 11 is fixed to the plate surface 2a of the fixed platen 2 by a plurality of bolts 10a. The fixed platen 2 and the auxiliary platen 11 are equivalent to a "fixed side platen".

The auxiliary platen 11 is provided with a magnetic clamp device 11m that generates magnetism for fixing the fixed mold M1 to the front surface of its plate surface 11a. A fitting hole 11h into which a locating ring 13 of the mold set M is fitted is formed in the central portion of the auxiliary platen 11, and its end portion also serves as an insertion hole into which the injection nozzle is inserted from the rear.

Next, the movable auxiliary platen 12 will be explained.

As shown in Fig. 1, the movable auxiliary platen 12 is a thick steel plate of almost the same size as the movable platen 3, and is similar to the fixed auxiliary platen 11. The auxiliary platen 12 is fixed to the plate surface 3a of the movable platen 3 by a plurality of bolts 10b. The movable platen 3 and the auxiliary platen 12 are equivalent to a "movable side platen". The auxiliary platen 12 is provided with a magnetic clamp device (not shown in the figures) that generates magnetism for fixing the movable mold M2 to the front surface of its plate surface 12a.

A mold posture setting device 20 is provided to the auxiliary platen 11 described above, and sets the posture of the mold set M into a prescribed posture, in a state in which the mold set M has been brought into an inter platen space 14 and the locating ring 13 that projects rearward from the fixed mold M1 has been fitted into the fitting hole 11h.

Furthermore, since the abovementioned magnetic clamp device 11m is provided, accordingly the mold falling down prevention device 30 is also provided that prevents the fixed mold M1 from falling down on the plate surface 11a due to shock during operation of the injection molding machine when the mold is opened up, or during ejection .

A mold falling down prevention device is also provided to the auxiliary platen 12 and prevents the movable mold M2 from falling down on the plate surface 12a due to shock during operation of the injection molding machine when the mold is opened up, or during ejection.

However illustration and explanation of this mold falling down prevention device will be omitted, since it is similar to the mold falling down prevention device 30 provided to the auxiliary platen 11.

Next, the mold posture setting device 20 will be explained.

As shown in Figs. 2, 4, and 5, the mold posture setting device 20 sets the posture of the mold set M to a prescribed posture when the mold set M has been brought into the inter platen space 14 between the auxiliary platens 11, 12, and while it is being positioned on and being fixed to the plate surface 11a of the fixed auxiliary platen 11.

This mold posture setting device 20 comprises a mold edge regulation member 21 that is capable of contacting against a horizontal edge surface or a vertical edge surface of the mold set M in a surface contacting state, a guidance mechanism 22 (i.e. a guidance means) that guides this mold edge regulation member 21 so that it can shift parallel to itself in the direction orthogonal to this mold edge regulation member 21, and a shifting drive means 25 that shifts the mold edge regulation member 21 parallel to itself so as to make it contact against the edge surface of the mold set M in a surface contacting state.

This mold posture setting device 20 is adapted to be capable of bringing the mold set M, while it is suspended from a suspension means such as a ceiling crane, into the inter platen space, and to be capable, in a state in which the locating ring 13 of the mold set M has been fitted into the fitting hole 11h of the plate surface 11a, of parallel shifting the mold edge regulation member 21 with the shifting drive means 25 toward the mold set M via the guidance mechanism 22, so that it contacts against the edge surface of the mold M (the fixed mold M1) in a surface contacting state, thus setting the posture of the mold set M to the prescribed posture.

The guidance mechanism 22 comprises a base member 23 that is disposed parallel to the mold edge regulation member 21 on the opposite side of the mold edge regulation member 21 from the mold set M and that is fixed to the plate surface 11a, and a pair of guide members 24 that are passed through the base member 23 so that they can slide freely through it and whose end portions are connected to the mold edge regulation member 21. The shifting drive means 25 includes a hydraulic cylinder that is disposed between the pair of guide members 24 and is parallel thereto.

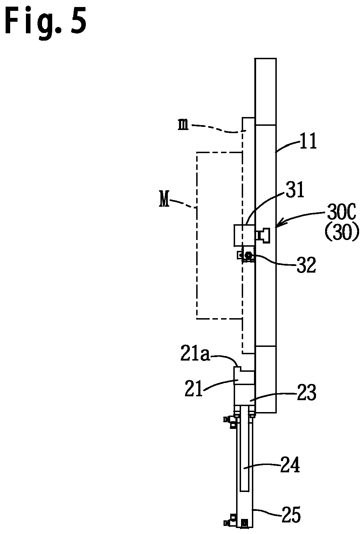

The base member 23 is a horizontal member that is shaped as a rectangular parallelepiped longer in the left to right direction and that is fixed by a plurality of bolts 26 to the central portion in the left to right direction of the lower edge portion of the plate surface 11a of the auxiliary platen 11. And the mold edge regulation member 21 is a horizontal member that is shaped as a rectangular parallelepiped longer in the left to right direction and that is disposed in the vicinity of the upper side of the base member 23 and parallel thereto, with an engagement portion 21a being formed on the front edge portion of the upper edge portion of the mold edge regulation member 21 and being capable of engaging with the lower edge portion of a mold plate m of the fixed mold M1 from its front side (refer to Fig. 5).

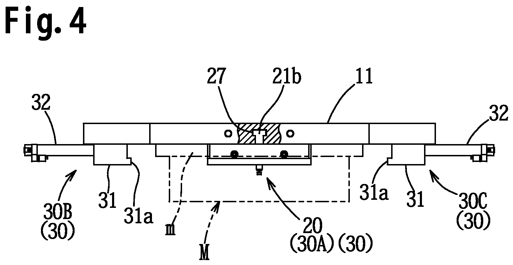

A T groove 27 is formed at the center of the lower portion of the auxiliary platen 11, and a T shaped member 21b is movably contained in this T groove 27, with the T shaped member 21b being attached to the mold edge regulation member 21 by a bolt 28 that is installed in the central portion of the mold edge regulation member 21, so that the mold edge regulation member 21 is guided by the bolt 20 and the T shaped member 21b to be shiftable up and down with respect to the auxiliary platen 11 (refer to Fig. 4).

The pair of guide members 24 are both disposed in a vertical posture and passed through slide holes in the base member 23, and their upper end portions are attached to the mold edge regulation member 21.

The shifting drive means 25 (i.e. the hydraulic cylinder) is disposed in a vertical posture with its cylinder main body 25a being fixed to the auxiliary platen 11, and its piston rod 25b passes in the lengthwise direction through a hole in the central portion of the base member 23 and extends upward, with its upper end being attached to the mold edge regulation member 21.

Next, the mold falling down prevention device 30 provided to the auxiliary platen 11 will be explained.

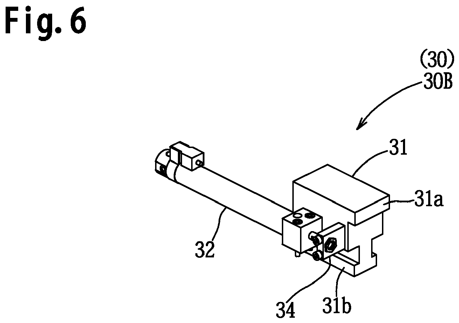

As shown in Figs. 2 through 6, this mold falling down prevention device 30 is a device for, during operation of the injection molding machine, preventing the fixed mold M1 from falling down along the plate surface 11a due to shock when the mold is opened up or when the molded product is ejected. This mold falling down prevention device 30 comprises a lower edge falling down prevention mechanism 30A that consists of the above described mold posture setting device 20, and a left edge falling down prevention mechanism 30B and a right edge falling down prevention mechanism 30C.

It should be understood that, when the mold set M is being brought into the inter platen space 14, the mold edge regulation member 21 of the lower edge falling down prevention mechanism 30A is backed up to a backup position (which is its lower limit position), as shown in Fig. 2. After the posture of the mold set M has been set to the prescribed posture by the mold posture setting device 20, during operation of the injection molding machine 1, the mold edge regulation member 21 is contacted against the lower edge of the fixed mold M1, and its engagement portion 21a is held in the state of being engaged with the lower edge portion of the mold plate m of the fixed mold M1.

As shown in Figs. 2, 5, and 6, the left edge falling down prevention mechanism 30B comprises a left edge regulation member 31B and a hydraulic cylinder 32. An engagement portion 31a that can engage with the left edge portion of the mold plate m from the front side is formed at the front end portion of the right end portion of the left edge regulation member 31 A horizontal T groove 33 is formed at an intermediate position at the left edge of the plate surface 11a, and a T shaped foot portion 31b of the left edge regulation member 31B is received in the T groove 33 so that it can shift freely leftward and rightward.

The end portion of the cylinder main body of the hydraulic cylinder 32 is fixed to the plate surface 11a, and the end portion of its piston rod is connected to the left edge regulation member 31 via a link plate 34. While the mold set M is being brought into the inter platen space 14, the left edge regulation member 31B is in its backup position (which is its limit position to the left), as shown in Fig. 2.

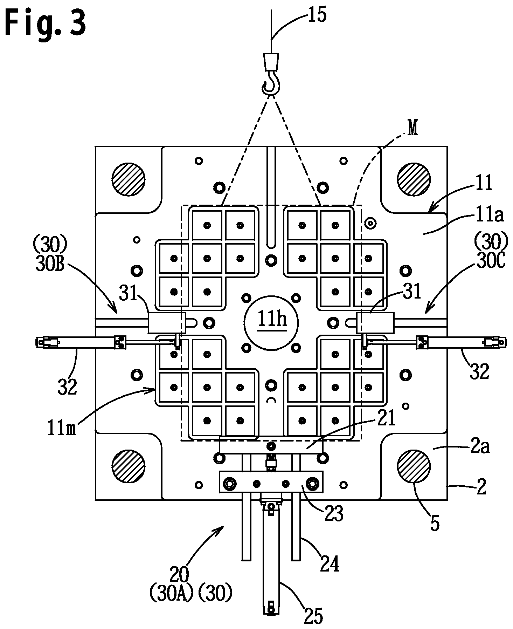

After the mold set M has been brought in, as shown in Fig. 3, and after posture setting of the mold set M, the left edge regulation member 31B is shifted to its position where it contacts against the left edge of the mold set M, and its engagement portion 31a engages with the left edge portion of the mold plate m. It should be understood that the right edge falling down prevention mechanism 30C comprises a right edge regulation member 31C: explanation of this mechanism will be curtailed, since it is symmetrical left to right with the left edge falling down prevention mechanism 30B.

Next, the operation and the beneficial effects of the mold posture setting device 20 described above, and the method for setting the posture of the mold by employing this mold posture setting device 20, will be explained.

This mold posture setting method includes: a preparation step of preparing, in advance, the mold posture setting device (20) described above; a mold bringing and fitting step of bringing the mold set M, suspended from the suspension means, into the inter platen space (14), and fitting the locating ring (13) of the mold set M into the fitting hole 11h of the plate surface 11a; and a subsequent mold posture setting step of, with the mold set M still suspended from the suspension means, setting the posture of the mold set M to a prescribed posture by parallel shifting the mold edge regulation member 21 with the shifting drive means 25 via the guidance mechanism 22 toward the mold set M so as to contact it against the edge surface of the mold set M in a surface contacting state.

To explain in detail on the basis of Fig. 2, during mold exchange, the mold set M that is no longer to be used is carried out from the inter platen space 14 while suspended from a crane, and the mold set M that is now to be used is brought into the inter platen space 14 in the state of being suspended from a suspension means. At this time the hydraulic cylinder 25, which is the shifting drive means, is in its state in which the piston rod 25b is retracted, so that the mold edge regulation member 21 is kept in its lower limit position in which it is contacted against the base member 23.

When the locating ring 13 of the mold set M is fitted into the fitting hole 11h and the molds have been squeezed together until near a state in which the mold is clamped together, then, as shown in Fig. 2, it is often the case that the mold set M has assumed an posture in which it is rotated through a small angle around the axis of the locating ring 13. In this state, as shown in Fig. 3, the piston rod 25b of the hydraulic cylinder 25 is extended, and, due to the mold edge regulation member 21 thereby being raised and being brought into contact against the lower edge of the fixed mold M1 in a surface contacting state, the mold set M is rotated around the center of the locating ring 13, so that its lower edge becomes horizontal and it assumes the prescribed posture.

Here, the prescribed posture is the posture in which the lower edge of the mold set M is in a horizontal orientation, and at this time the left edge and the right edge of the mold set M become vertical. Subsequently, after the mold clamped together state has been reached, the fixed mold M1 is fixed to the plate surface 11a with the magnetic clamp device 11m, and the movable mold M2 is fixed to the plate surface 12a with a magnetic clamp device (not shown in the figures) that is similar to the magnetic clamp device 11m.

Since, in this manner, the mold set M is set to the prescribed posture by fitting the locating ring 13 of the mold set M into the fitting hole 11h of the plate surface 11a, and by, in the state in which the mold set M is suspended from the suspension means 15, parallel shifting the mold edge regulation member 21 toward the mold set M with the shifting drive means 25 via the guidance mechanism 22 so that it comes into contact with the edge surface of the mold set M in a surface contacting state, accordingly it is possible to set the posture of the mold set M in an efficient manner to the prescribed posture by the simple operation of shifting the mold edge regulation member 21 with the shifting drive means 25, so that it is possible to enhance the working efficiency for exchanging the molds.

### Concrete Example 2

In this second concrete example, an example is shown in which the above escribed mold posture setting device 20 is partially altered, and herein, to parts that are the same as parts of the first concrete example described above, the same reference symbols are appended, and explanation thereof is curtailed.

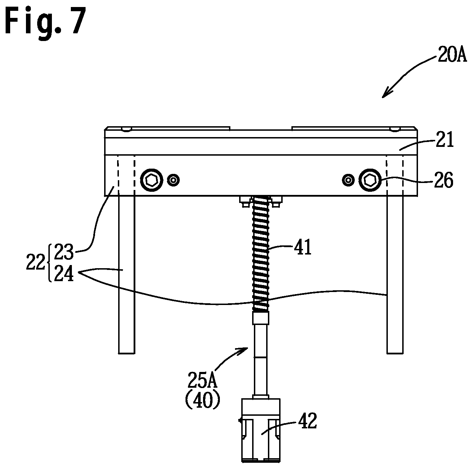

In this mold posture setting device 20A, as shown in Fig. 7, a single screw mechanism 40 that is attached at the central portion in the transverse direction is employed as a shifting drive means 25A. This screw mechanism 40 comprises a vertically oriented screw shaft 41 whose upper end portion is linked to the mold edge regulation member 21, a screw nut (not shown in the figure) that is attached to the base member 23 and into which the screw shaft 41 is screwed and engaged, and an electric motor 42 that is guided by the auxiliary platen 11 or by some other stationary member so that it cannot rotate but can freely move vertically, and that is connected to the lower end portion of the screw shaft 41 so that it is capable of rotationally driving the screw shaft 41.

It should be understood that the abovementioned screw shaft 41 may be formed as a trapezoidal screw or as a square screw , and the screw nut may also be formed as a trapezoidal screw or as a square screw.

When the posture of the mold set M is to be set to the prescribed posture, in a similar manner to the case in the first concrete example, the screw shaft 41 is rotationally driven by the electric motor 42, and the mold edge regulation member 21 is raised and is brought into contact with the lower edge of the mold set M in a surface contacting state, so that the mold set M is set to a horizontal posture. In a similar manner to the case in the first concrete example, a lower edge falling down prevention mechanism 30A may also be applied to this mold posture setting device 20A.

### Concrete Example 3

In this third concrete example, an example is shown in which the above described mold posture setting devices 20, 20A are partially altered, and herein, to parts that are the same as parts of the first and second concrete examples described above, the same reference symbols are appended, and explanation thereof is curtailed.

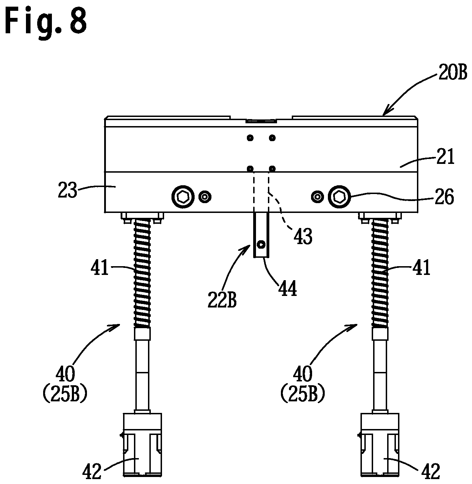

As shown in Fig. 8, in this mold posture setting device 20B, two screw mechanisms 40 that are attached near the left end portion and near the right end portion are employed as a shifting drive means 25B, and a linear guidance mechanism is employed as the guidance mechanism 22B.

Each of the screw mechanisms 40 comprises a vertically oriented screw shaft 41 whose upper end portion is linked to the mold edge regulation member 21, a screw nut that is attached to the base member 23 and into which the screw shaft 41 is screwed and engaged, and an electric motor 42 that is guided by the auxiliary platen 11 or by some other stationary member so that it cannot rotate but can freely move vertically, and that is connected to the lower end portion of the screw shaft 41 so that it is capable of rotationally driving the screw shaft 41.

It should be understood that the abovementioned screw shafts 41 may be formed as trapezoidal screws or as square screw s, and the screw nuts may also be formed as trapezoidal screws or as square screws.

The aforementioned linear guidance mechanism comprises a straight guide groove definition member 43 that is attached vertically to the base member 23, and a straight guide rod 44 whose upper end portion is connected to the mold edge regulation member 21 and that is engaged in the guide groove of the straight guide groove definition member 43.

When the posture of the mold set M is to be set to the prescribed posture with this mold posture setting device 20B, the two electric motors 42 are driven together and the mold edge regulation member 21 is raised while being kept parallel to itself, and is brought into contact with the lower edge of the mold set M in a surface contacting state, so that the lower edge of the mold set M is set to be horizontal. In a similar manner to the case in the first concrete example, a lower edge falling down prevention mechanism 30A may also be applied to this mold posture setting device 20B.

### Concrete Example 4

In this fourth concrete example, an example is shown in which the position of attachment of the above described mold posture setting device 20 is partially altered; to parts thereof that are the same as parts of the first concrete example described above the same reference symbols are appended, and explanation thereof is curtailed.

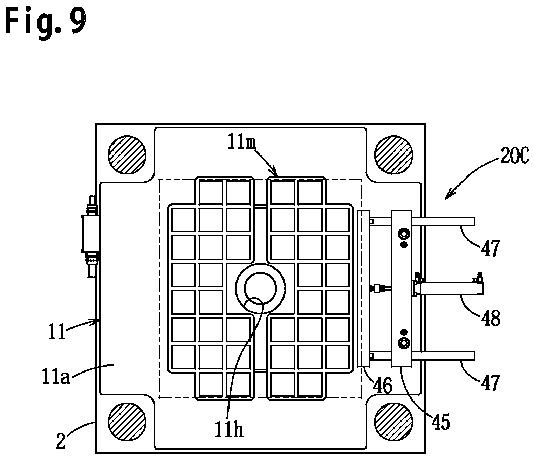

This mold posture setting device 20C will be explained in a simple manner since, as shown in Fig. 9, it has a structure similar to that of the mold posture setting device 20 of the first concrete example.

This mold posture setting device 20C is set up at an intermediate portion of the right edge portion of the plate surface 11a, and is adapted to set the posture of the mold set M to a prescribed posture by setting the right edge of the mold set M to a vertical posture. This mold posture setting device 20C comprises a base member 45 that is long and thin in the vertical direction and that is fixed to the plate surface 11a in a vertical posture, a mold edge regulation member 46 that is long and thin in the vertical direction and that is disposed parallel to the left side of this base member 45,a pair of upper and lower horizontal guide members 47 that are passed through portions of the base member 45 near its upper end and its lower end so as to slide freely therein, and a hydraulic cylinder 48 that is disposed in a horizontal posture at an intermediate position between the pair of guide members 47.

The main body of the hydraulic cylinder 48 is fixed to the plate surface 11a, and its piston rod passes through a hole in the base member 45 with its left end portion being connected to the mold edge regulation member 46.

When the posture of the mold set M is to be set to the prescribed posture, the mold edge regulation member 46 is parallel shifted leftward by the hydraulic cylinder 48 and is brought into contact with the right edge of the mold set M in a surface contacting state, and thereby the right edge of the mold set M is set to be vertical and the mold set M is put into the prescribed posture. It should be understood that it would also be acceptable to provide the mold posture setting device 20C at the left edge of the plate surface 11a, in a state in which the structure of the mold posture setting device 20C of Fig. 9 is inverted left and right.

### Concrete Example 5

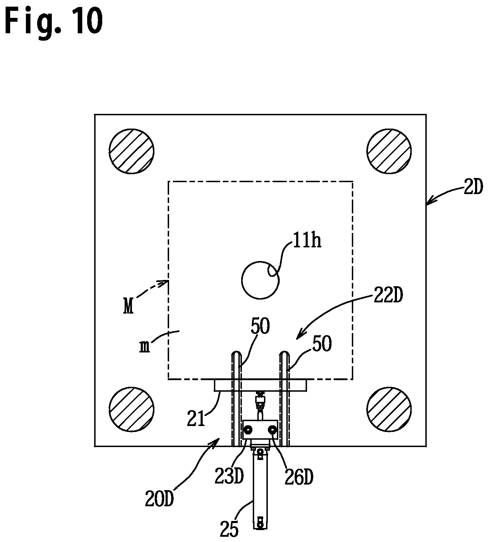

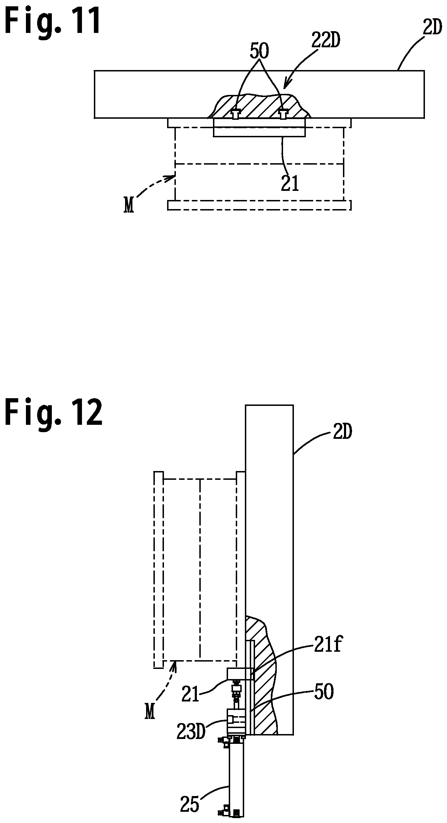

In this fifth concrete example, an example is shown in which the guidance mechanism 22 of the mold posture setting device 20 of the first concrete example 1 described above is altered; this fifth concrete example will herein be explained on the basis of Figs. 10 through 12. Here, to parts that are the same as parts of the first concrete example described above the same reference symbols are appended, and explanation thereof is curtailed. It should be understood that illustration of the auxiliary platens 11, 21 and the magnetic clamp device 11m described above is omitted, and, for example, a plurality of hydraulic clamp devices (not shown in the figures) are provided.

No mold falling down prevention device is provided, since the clamp device is not a magnetic clamp device.

This mold posture setting device 20D is directly provided to the fixed platen 2D, and comprises a mold edge regulation member 21, a base member 23D, a guidance means 22D, and a shifting drive means 25, with the mold edge regulation member 21 and the shifting drive means 25 being the same as in the case of the first concrete example.

The base member 23D is formed to be short, and is disposed between a pair of T grooves 27D that will be described hereinafter and is fixed to the fixed platen 2D by a pair of bolts 26D.

Next the guidance means 22D, which characterizes this concrete example, will be explained.

The guidance means 22D includes the pair of T grooves 27D that are formed in the fixed platen 2D in a vertical orientation at positions corresponding to locations near both ends of the mold edge regulation member 21, and a pair of T shaped foot portions 21f that are formed integrally with the mold edge regulation member 21 and that are fitted into the T grooves 27D so as to slide freely therein.

When the mold edge regulation member 21 is to be raised or lowered by the shifting drive means 25, it is arranged for the mold edge regulation member 21 to be parallel shifted up and down while being held in a horizontal posture by the pair of T shaped foot portions 21f that shift and slide in the pair of T grooves 27D.

In a similar manner to the case with the first concrete example, auxiliary platens 11, 12 and a plurality of magnetic clamp devices may also be provided.

### Concrete Example 6

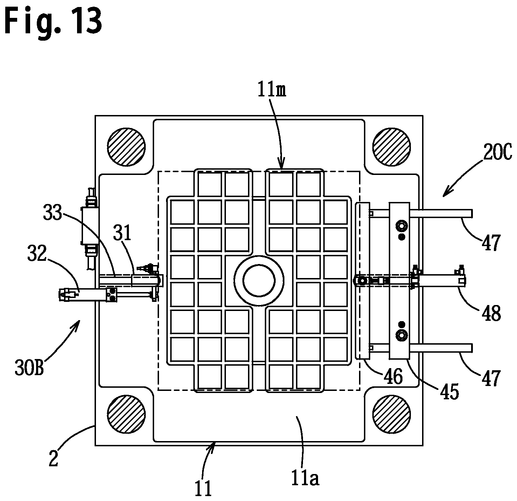

The mold posture setting device 20C of this sixth concrete example will now be explained on the basis of Fig. 13.

This mold posture setting device 20C is similar to the mold posture setting device 20C of the fourth concrete example. Therefore, the same reference symbols are appended to members that are the same, and explanation thereof is curtailed. This mold posture setting device 20C also serves as a right edge falling down prevention mechanism. However, instead of the mold posture setting device 20C, it would also be acceptable to adopt the mold posture setting device 20D of the fifth concrete example.

Furthermore, a left edge falling down prevention mechanism 30B that is similar to the left edge falling down prevention mechanism 30B of the first concrete example is also provided to this injection molding machine. Accordingly the same reference symbols will be appended to members that are the same, and description thereof will be curtailed.

### Concrete Example 7

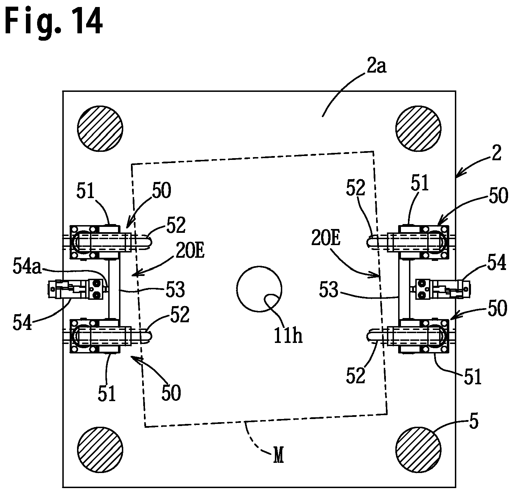

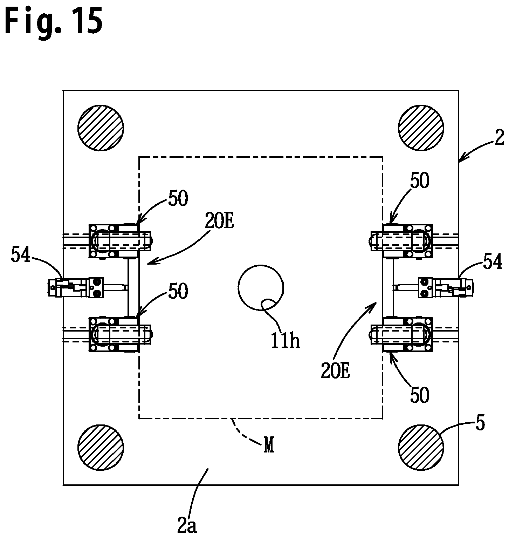

A plurality of hydraulic clamp devices 50 and mold posture setting devices 20E of an injection molding machine according to this concrete example 7 will now be explained on the basis of Figs. 14 and 15.
A mold posture setting device 20E and a pair of hydraulic clamp devices 50 are provided at an intermediate portion of the left edge portion of the plate surface of the fixed platen 2, and similarly at an intermediate portion of the right edge portion thereof.
Each of the hydraulic clamp devices 50 includes, for example, a clamp main body 51, a clamp arm that is pivotally supported by the clamp main body, and a hydraulic cylinder or the like that is capable of rotationally driving the clamp arm. The clamp main body 51 is provided with a T shaped foot portion that moves freely within a T groove 52.

The pair of clamp devices 50 on the left side are adapted to be shiftable along the pair of horizontal T grooves 52, and moreover the two end portions of a vertical link member 53 are fixed to their clamp main bodies 51. And vertical surfaces that are orthogonal to the plate surface 2a are defined at the right ends of the clamp main bodies 51. The link member 53 has a predetermined length in the vertical direction, and a vertical surface is defined on its rightward facing surface that is long and narrow in the vertical direction and is orthogonal to the plate surface 2a. The right edge surface of the link member 53 is located in the same position in the transverse direction as the right edge surfaces of the pair of clamp main bodies 51.

A hydraulic cylinder 54 is provided in a horizontal posture at an intermediate position between the pair of clamp devices 50, and its cylinder main body is fixed to the plate surface 20, while the end of its piston rod 54a is linked to an intermediate portion of the link member 53; and it is arranged for the pair of clamp devices 50 to be shiftable by this hydraulic cylinder 54 forwards and backwards along the transverse direction, via the link member 53.

As shown in Fig. 14, in the state with the mold set M brought in and with its locating ring fitted into the recess in the center of the fixed platen 2, if the mold set M is in a tilted state, the pair of clamp devices 50 are shifted rightward toward the mold set M by the hydraulic cylinder 54, and, when the vertical surfaces at the right ends of the pair of upper and lower clamp main bodies 51 are contacted against the left edge surface of the mold plate on the fixed side of the mold set M and are pressed rightward, then the posture of the mold set M is set to the prescribed posture, as shown in Fig. 15.

This left side mold posture setting device 20E comprises the pair of clamp main bodies 51 that are linked by the link member 53 (which corresponds to a mold edge regulation member), the guidance means that guides these clamp main bodies 51, 51 to be parallel shifted in the direction orthogonal to the vertical surfaces at the right ends of the clamp main bodies 51, and the hydraulic cylinder 54 that parallel shifts the pair of clamp main bodies 51, 51 in the direction orthogonal to the vertical surfaces at their right ends and causes them to contact against the edge surface of the mold set M (which corresponds to a shifting driving means). The guidance means comprises the pair of clamp devices 50 and the pair of T grooves 52.

The mold posture setting device 20E also functions as a clamp device position changeover mechanism that changes over the pair of clamp devices 50 between an in use position (refer to Fig. 50) and a backup position (refer to Fig. 14). In this manner, it becomes possible to set the posture of the mold set M to the prescribed posture, even with the left side mold posture setting device 20E alone.

Since the pair of clamp devices 50 and the mold posture setting device 20E on the right side are left and right symmetric with the pair of clamp devices 50 and the mold posture setting device 20E on the left side, accordingly the same reference symbols are appended to members thereof that are the same, and explanation thereof will be curtailed.

As described above, the posture of the mold can be set with the use of the left side mold posture setting device 20E by itself, or with the use of the right side mold posture setting device 20E by itself, or with the use of the pair of both the left and right mold posture setting devices 20E together.

Next, examples in which the above concrete examples are partially altered will be explained.
(1) It would also be acceptable to employ the following structure in the mold posture setting device 20, instead of the hydraulic cylinder 25. A screw shaft disposed within the T groove 27, a T shaped member that is received within the T groove 27 so as to shift freely therein and that is linked to the mold edge regulation member and with which the screw shaft is engaged by screwing and, and an electric motor that rotationally drives the screw shaft are provided; and thereby it is arranged for the mold edge regulation member to be shifted by the electric motor via the screw shaft and the T shaped member. It should be understood that auxiliary platens 11, 12 and magnetic clamp devices are also provided, as in the case of the first concrete example.
(2) It would also be acceptable to employ the following structure in the left edge falling down prevention mechanism 30B and in the right edge falling down prevention mechanism 30C, instead of the hydraulic cylinder 32. A screw shaft that is disposed within a T groove 33, a T shaped member that is received within the T groove 33 so as to shift freely therein and is linked to the mold edge regulation member and with which the screw shaft is engaged by screwing, and an electric motor that rotationally drives the screw shaft are provided; and thereby it is arranged for the left edge regulation member 31B and the right edge regulation member 31C to be shifted by the electric motor via the screw shaft and the T shaped member.
(3) Although magnetic clamp devices were provided to the injection molding machines of the second, third, fourth, and sixth concrete examples described above, in some cases a plurality of hydraulic clamp devices or a plurality of bolt type clamp devices may be employed, instead of magnetic clamp devices.
(4) Apart from the above, for a person skilled in the art, it would be possible to implement the present invention by adding various changes to the concrete examples described above without deviating from the gist of the invention, and the present invention is to be understood as including such variant embodiments.

### DESCRIPTION OF REFERENCE NUMERALS

1: injection molding machine
2: fixed platen
3: movable platen
11, 12: auxiliary platens
11a, 12a: plate surfaces
11h: fitting hole
13: locating ring
14: inter platen space
15: suspension means
20, 20A∼20E: mold posture setting devices
21, 46, 53: mold edge regulation members
22, 22B, 22D: guidance means
23, 23D, 45: base members
24, 47: guide members
25, 25A, 25B, 48, 54: shifting drive means
41: screw shaft
42: electric motor

## Claims

1. A mold posture setting method for an injection molding machine, **characterized by** comprising:
a preparation step of preparing in advance a mold posture setting device that sets a posture of a mold set when the mold set is brought into an inter platen space between platens of the injection molding machine, and fixes its position on a platen plate surface, and that comprises a mold edge regulation member that is capable of contacting against a horizontal edge surface or a vertical edge surface of the mold set in a surface contacting state, a guidance means that guides the mold edge regulation member to be shifted parallel to itself in a direction orthogonal to the mold edge regulation member; and a shifting drive means that drives the mold edge regulation member to shift parallel to itself so as to contact against an edge surface of the mold set;
a mold bringing and fitting step of bringing the mold set, suspended from a suspension means, into the inter platen space and fitting a locating ring of the mold set into a fitting hole of the plate surface; and
a mold posture setting step of, with the mold set still suspended from the suspension means, setting the posture of the mold set to a prescribed posture by parallel shifting said mold edge regulation member via the guidance means with the shifting drive means toward the mold set, so as to contact it against the edge surface of the mold set in a surface contacting state.

2. A mold posture setting method for an injection molding machine according to claim 1, **characterized in that** said mold set includes a fixed side mold and a movable side mold.

3. A mold posture setting device for an injection molding machine that sets a posture of a mold set when the mold set is brought into an inter platen space between platens of the injection molding machine, and that fixes its position on a platen plate surface, **characterized by** comprising:
a mold edge regulation member that is capable of contacting against a horizontal edge surface or a vertical edge surface of the mold set in a surface contacting state;
a guidance means that guides the mold edge regulation member to be shifted parallel to itself in a direction orthogonal to the mold edge regulation member; and
a shifting drive means that drives the mold edge regulation member to shift parallel to itself so as to contact against an edge surface of the mold set;
wherein, in a state in which the mold set is brought into said inter platen space and a locating ring of the mold set is fitted into a fitting hole of said plate surface, the posture of the mold set can be set into a prescribed posture by parallel shifting the mold edge regulation member toward the mold set via the guidance means by the shifting drive means and contacting it against an edge surface of the mold set in a surface contacting state.

4. A mold posture setting device for an injection molding machine according to claim 3, **characterized in that** the guidance means comprises a base member disposed parallel to the mold edge regulation member and on a side opposite to the mold set with respect to the mold edge regulation member and fixed to the plate surface, and a pair of guide members that are passed through this base member so as to slide freely therein and whose end portions are connected to the mold edge regulation member.

5. A mold posture setting device for an injection molding machine according to claim 4, **characterized in that** the shifting drive means comprises a hydraulic cylinder disposed parallel to the pair of guide members.

6. A mold posture setting device for an injection molding machine according to claim 4, **characterized in that** the shifting drive means comprises a screw shaft disposed between the pair of guide members and parallel thereto, a nut fixed to the base member, and an electric motor that rotationally drives the screw shaft.

7. A mold posture setting device for an injection molding machine according to claim 3, **characterized in that**:
a pair of upper and lower hydraulic clamp devices, separated in the vertical direction, are provided to at least one of an intermediate portion of a left side portion of the plate surface and an intermediate portion of a right side portion thereof so as to be shiftable in the left to right direction, and a pair of clamp main bodies of the pair of clamp devices are connected by a link member; and
thed pair of clamp main bodies constitute the mold edge regulation member.
